# EUROPÄISCHE PATENTSCHRIFT

(11) **EP 1 550 193 B1**
(45) Veröffentlichungstag und Bekanntmachung des Hinweises auf die Patenterteilung: **14.06.2006**
(21) Anmeldenummer: 03750355.4
(22) Anmeldetag: 15.09.2003
(51) Int. Cl.: H02H 9/00, H02H 7/22

(54) **VERFAHREN UND VORRICHTUNG ZUM EINSCHALTEN EINES ZWISCHEN KAPAZITIVEN ELEMENTEN ANGEORDNETEN LEISTUNGSSCHALTERS**
METHOD AND DEVICE FOR SWITCHING ON A POWER SWITCH ARRANGED BETWEEN CAPACITIVE ELEMENTS
PROCEDE ET DISPOSITIF DE MISE EN MARCHE D'UN DISJONCTEUR PLACE ENTRE DES ELEMENTS CAPACITIFS

(30) Priorität: 09.10.2002 DE 10247112
(43) Veröffentlichungstag der Anmeldung: 06.07.2005
(73) Patentinhaber: SIEMENS AKTIENGESELLSCHAFT, 80333 München (DE)
(72) Erfinder: BOLZ, Stephan, 93102 Pfatter (DE); KNORR, Rainer, 93055 Regensburg (DE); LUGERT, Günter, 93055 Regensburg (DE)
(86) Internationale Anmeldenummer: PCT/DE2003/003053
(87) Internationale Veröffentlichungsnummer: WO 2004/034543

(56) Entgegenhaltungen:
- EP-A- 0 666 581
- WO-A-02/066293
- GB-A- 475 743

## Beschreibung

Die Erfindung betrifft ein Verfahren zum Einschalten eines zwischen kapazitiven Elementen angeordneten Leistungsschalters nach dem Oberbegriff von Anspruch 1, insbesondere eines relaisbetätigten Leistungsschalters in einem mit einem Integrierten Starter-Generator (ISG) ausgerüsteten Kraftfahrzeug. Die Erfindung betrifft auch eine Vorrichtung zur Durchführung dieses Verfahrens nach Anspruch 4.

Ein Verfahren und eine Vorrichtung gemäβ des Stands der Technik ist durch Dokument WO-A-0266293 bekannt.

Im einem Kraftfahrzeug-Bordnetz mit ISG sind Schaltvorgänge zwischen Energiespeichern - Akkumulatoren verschiedener Nennspannungen und Kondensatoren (Zwischenkreiskondensatoren, Doppelschichtkondensatoren) - über Umrichter oder Schaltregler mittels Leistungsschaltern erforderlich, die mittels der Befehle eines Steuergeräts durchgeführt werden.

Bedingung dabei ist, dass vor dem Öffnen eines Schalters der durch ihn fließende Schalterstrom auf OA gebracht wird, und dass vor dem Schließen eines Schalters die zwischen seinen Schaltkontakten liegende Schalterspannung auf 0V gebracht wird, damit der Schalter leistungsfrei betätigt werden kann.

Ein Schalterstrom 0A kann beispielsweise durch Abschalten von AC/DC-Umrichter oder DC/DC-Schaltregler erfolgen und stellt in der Praxis kein Problem dar.

Die Regelung auf 0V Schalterspannung, d.h., keine Potentialdifferenz zwischen den Polen des (geöffneten = nicht leitenden) Schalters, erfolgt in der Regel durch gezieltes Umladen eines der Energiespeicher, beispielsweise eines Zwischenkreiskondensators, da dieser in der Regel der kleinere der Energiespeicher ist. Diese Regelung kann auch prinzipiell durch einen Umrichter oder einen zwischen diesem und dem Bordnetz befindlichen Schaltregler erfolgen.

Der Zwischenkreiskondensator hat beispielsweise eine Kapazität von mehreren 10.000µF, der Doppelschichtkondensator beispielsweise eine Kapazität von 200F, die Akkumulatoren eine Kapazität von mehreren Ah. Die auszugleichende Schalterspannung kann dabei bis zu 60V betragen.

Bedingt durch das ungünstige Verhältnis von Leistungsfähigkeit von Umrichter (z.B. 6kW) oder Schaltregler (z.B. 1kW) zu der für den Ladungsausgleich (bis 40 Joule) erforderlichen Energie sind dem Spannungsausgleich jedoch in der Praxis enge Grenzen gesetzt.

Sollen nun beispielsweise die Schalter mit Relais aufgebaut werden, so reicht die so erzielbare Genauigkeit des Spannungsausgleichs nicht aus, denn die im normalen Betrieb auftretenden Ströme und Leistungen erfordern die Verwendung von Bauelementen (Kondensatoren, Schaltern) mit sehr kleinen Widerständen. Entsprechend hoch fallen bei vorhandenen Spannungsdifferenzen die Ausgleichströme über dem zu schließenden Schalter aus. Im Extremfall führt dies zur Zerstörung der Schalter.

Eine Begrenzung des durch den Schalter fließenden Ausgleichstromes auf einen ungefährlichen Wert setzt üblicherweise eine Strommessung voraus, die bei der Höhe der auftretenden Ströme einen kostenintensiven Stromsensor erfordert. Dies gilt aber nicht nur für das Zusammenschalten kapazitiver Elemente in Verbindung mit Integrierten Startergeneratoren, sondern ganz allgemein für das Zusammenschalten von Kondensatoren, Akkumulatoren oder auch Brennstoffzellen.

Es ist Aufgabe der Erfindung, ein Verfahren und eine entsprechende Vorrichtung zum Einschalten eines zwischen kapazitiven Elementen angeordneten Leistungsschalters zu schaffen, die ohne kostenintensiven Stromsensor auskommt und bei welcher der Einschaltvorgang und der Einschaltzustand so geregelt werden, dass auch bei großer Potentialdifferenz zwischen den Schaltkontakten des Leistungsschalters vor dessen Einschalten eine Beschädigung des Leistungsschalters ausgeschlossen ist.

Diese Aufgabe wird erfindungsgemäß durch ein Verfahren gemäß den Merkmalen von Anspruch 1 und eine Vorrichtung gemäß den Merkmalen des Anspruchs 4 gelöst.

Vorteilhafte Weiterbildungen der Erfindung sind den Unteransprüchen zu entnehmen.

Die Erfindung umfasst die technische Lehre, einen Potentialausgleich zwischen den geöffneten Schaltkontakten des Leistungsschalters mittels einer zu diesen Schaltkontakten parallel schaltbaren, verlustbehafteten Drossel herbeizuführen, indem Ausgleichströme über die Drossel fließen und abklingen können, bis an den Schaltkontakten des Leistungsschalters nahezu keine Potentialdifferenz mehr besteht, und kein Ausgleichstrom mehr fließt, bevor der Leistungsschalter eingeschaltet wird.

Ein Ausführungsbeispiel nach der Erfindung wird nachstehend anhand einer schematischen Zeichnung näher erläutert. In der Zeichnung zeigen:
- Figur 1: ein Prinzipschaltbild eines 14V/42V-Kraftfahrzeug-Bordnetzes,
- Figur 2: eine Teilschaltung aus Figur 1 mit Drossel,
- Figur 3: den Verlauf des Ausgleichstroms mit und ohne Drossel,
- Figur 4: eine Schaltung zur Ermittlung des Ausgleichstroms über den Spannungsabfall an der Drossel L,
- Figur 5: ein Steuergerät, soweit es die Steuerung der Schalter S1 bis S3 betrifft, und
- Figur 6: ein Signaldiagramm der Schaltbefehle und Schalterstellungen dieses Steuergeräts.

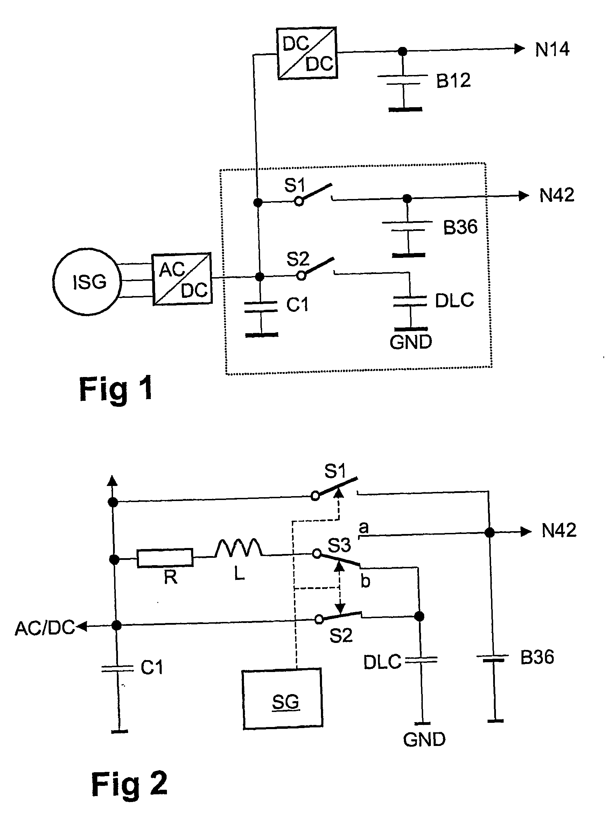

**Figur 1** zeigt ein Prinzipschaltbild eines 14V/42V-Kraftfahrzeug-Bordnetzes mit einem mit einer nicht dargestellten Brennkraftmaschine gekoppelten integrierten Starter-Generator ISG, anhand dessen die Erfindung erläutert wird.

Dieser ISG ist über einen bidirektionalen AC/DC-Wandler AC/DC a) direkt mit einem Zwischenkreiskondensator C1,
b) über einen Leistungsschalter S1 mit einem 36V-Akkumulator B36 und einem 42V-Bordnetz N42,
c) über einen Leistungsschalter S2 mit einem Doppelschichtkondensator DLC, und
d) über einen bidirektionalen DC/DC-Wandler DC/DC mit einem 12V-Akkumulator B12 und einem 14V-Bordnetz N14
verbunden.

**Figur 2** zeigt die gepunktet eingerahmte Teilschaltung aus Figur 1, in welche eine Reihenschaltung einer Drossel L (dargestellt mit ihrem Ohm' schen Widerstand R, der auch einen weiteren, mit ihm in Reihe liegenden, realen Widerstand repräsentieren kann), und eines Umschalters S3 eingefügt ist. Diese Reihenschaltung liegt in Stellung a des Schalters S3 parallel zu den Schaltkontakten des Schalters S1, und in Stellung b des Schalters S3 parallel zu den Schaltkontakten des Schalters S2. Der Umschalter S3 kann auch aus zwei Einschaltern bestehen. Die Schalter S1, S2 und S3 werden von einem Steuergerät SG betätigt.

Das Ausführungsbeispiel gemäß Figur 2 ermöglicht ein Verbinden des Zwischenkreiskondensators C1 mit dem Akkumulator B36 und alternativ mit dem Doppelschichtkondensator DLC. Der Einschaltbefehl UM zum Einschalten eines Leistungsschalters ist dem gemäß ein Umschaltbefehl und der Schalter S3 statt eines Einschalters dementsprechend ein Umschalter.

In Figur 2 ist der Zwischenkreiskondensator C1 mit dem Doppelschichtkondensator DLC über den geschlossenen (leitenden) Schalter S2 verbunden, zu welchem die Reihenschaltung aus Widerstand R, Drossel L und Umschalter S3 (in Stellung b) parallelgeschaltet ist, während er von dem Akkumulator B36 über den geöffneten (nichtleitenden) Schalter S1 getrennt ist.

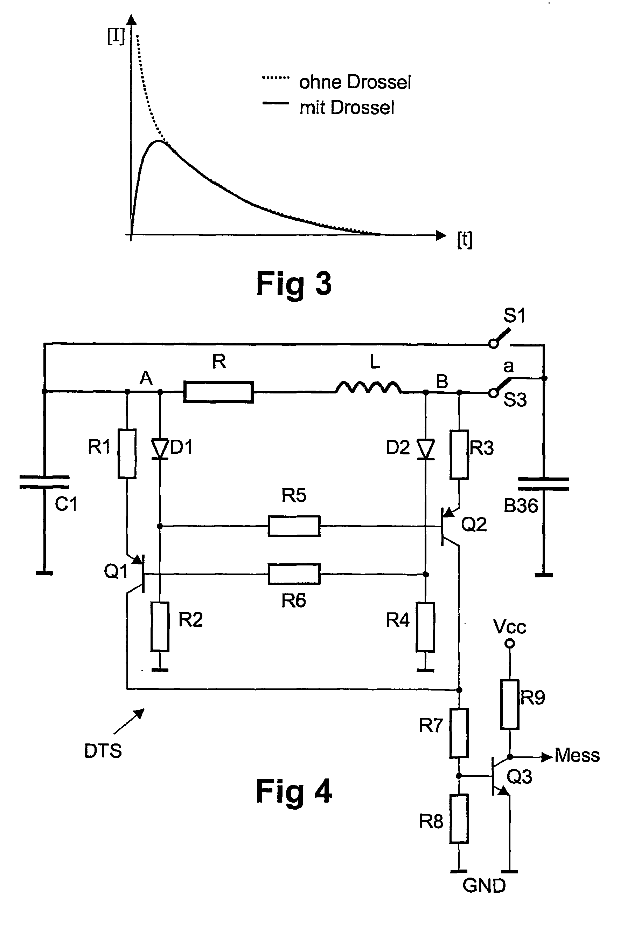

Soll nun der Zwischenkreiskondensator C1, an welchem eine hohe Spannung von 60V anliegt, die ihm beispielsweise vom Doppelschichtkondensator DLC eingeprägt wurde, mit dem Akkumulator B36, der eine Spannug von 36V aufweist, verbunden werden, so wird vom Steuergerät SG zunächst Schalter S2 geöffnet; Schalter S3 verbleibt noch in seiner Schaltstellung b, bis beide Schalter S1 und S2 sicher geöffnet sind, und wird erst dann in Schaltstellung a (Figur 4) gebracht.

Da der Zwischenkreiskondensator C1 ein anderes Potential aufweist, als der nun - über die Drossel L - mit ihm verbundene Akkumulator B36, wird ein Ausgleichstrom über die Drossel L fließen. Da diese einen Stromsprung nicht zulässt, wird der Strom von 0A zu steigen beginnen, wie dies in Figur 3 dargestellt ist. Ohne die über Schalter S3 parallelgeschaltete Drossel würde beim Schließen des Leistungsschalters S1 ein hoher Stromstoß entstehen, wie die gepunktete Kurve in Figur 3 zeigt, welche den Leistungsschalter zerstören könnte.

Da der Potentialausgleich mit zunehmendem Strom geringer wird, fällt der Ausgleichstrom wieder ab. Somit kommt es rasch zu einem Strommaximum und anschließend zu einem exponentiellen Ausklingen des Ausgleichstroms, der mit einem Potentialausgleich endet.

Ist der Ausgleichstrom abgeklungen, so besteht keine Gefahr mehr, den Akkumulator B36 mit dem Zwischenspeicher C1 über den Schalter S1 direkt zu verbinden. Der große Vorteil liegt darin, dass der jeweilige Schalter S1 oder - im umgekehrten Fall S2 - strom- und spannungslos geschaltet werden kann.

Da der Ausgleichstrom keinen stationären Wert erreicht, wird über der Drossel L eine Spannung U = L*di/dt induziert, die dem Strom proportional ist. Zusätzlich ergibt sich ein Spannungsabfall über dem Ohm' schen Widerstand R der Drossel L, der am Scheitelpunkt des Ausgleichstroms zur Wirkung kommt. Dort ist di/dt = 0. Zusätzlich begrenzt dieser Ohm'sche Widerstand R den maximalen Strom und bedämpft das Gesamtsystem (Schwingkreis) aus Kondensator, Akkumulator und Drossel.

Weil der Stromanstieg eine Spannungsänderung an der Drossel hervorruft, kann auf eine direkte Strommessung verzichtet werden und diese über die Messung der an der Drossel L (und ihrem Ohm'schen Widerstand R) liegenden, zum Strom proportionalen Spannung erfolgen.

Figur 4 zeigt eine Detektionsschaltung DTS zur Detektion des Ausgleichstroms, welcher fließt, wenn zwei kapazitive Elemente unterschiedlicher Spannung miteinander verbunden werden, d.h. hier, wenn der Zwischenkreiskondensator C1 vom Doppelschichtkondensator DLC, mit welchem er in Figur 2 verbunden ist, getrennt wird und mit dem Akkumulator B36 verbunden wird (oder umgekehrt).

In Figur 4 ist die Teilschaltung aus Figur 2 dargestellt, in welcher Schalter S1 weiterhin geöffnet ist und Schalter S3 von Stellung b (Figur 2) in seine Stellung a geschaltet wird.

Die Elemente C1, B36, R, L, S1 und S3 und ihre Verbindungen sind aus Figur 2 bekannt.

Am Verbindungspunkt A zwischen dem Zwischenkreiskondensator C1 und dem Widerstand R (bzw. der Drossel) zweigt eine Reihenschaltung aus einem Widerstand R1 und der Emitter-Kollektor strecke eines pnp-Transistors Q1 ab, ebenso am Verbindungspunkt B zwischen Drossel L und Schalter S3 eine Reihenschaltung aus einem Widerstand R3 und der Emitter-Kollektorstrecke eines pnp-Transistors Q2 ab. Die Kollektoren der beiden Transistoren Q1 und Q2 sind miteinander und über die Reihenschaltung zweier Widerstände R7 und R8 mit Bezugspotential GND verbunden.

Zwischen dem Verbindungspunkt A und Bezugspotential GND liegt eine Reihenschaltung aus einer zum Bezugspotential GND hin stromleitenden Diode D1 und einem Widerstand R2, ebenso liegt zwischen dem Verbindungspunkt B und Bezugspotential GND eine Reihenschaltung aus einer zum Bezugspotential GND hin stromleitenden Diode D2 und einem Widerstand R4.

Der Verbindungspunkt zwischen Diode D1 und Widerstand R2 und die Basis des pnp-Transistors Q2 sind durch einen Widerstand R5 verbunden, ebenso der Verbindungspunkt zwischen Diode D2 und Widerstand R4 und die Basis des pnp-Transistors Q1 durch einen Widerstand R5.

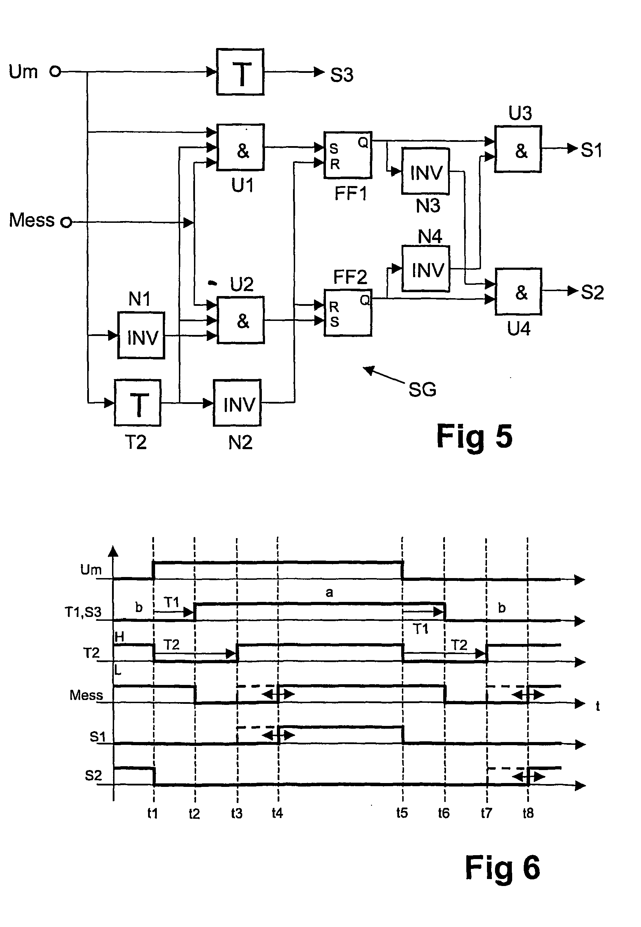

Der Verbindungspunkt zwischen den beiden Widerständen R7 und R8 ist mit der Basis eines npn-Transistors Q3 verbunden, dessen Emitter mit Bezugspotential GND verbunden ist, und dessen Kollektor einerseits über einen Widerstand R9 mit einer Versorgungsspannung Vcc von beispielsweise +5V verbunden ist, und andererseits mit einem in Figur 5 dargestellten Anschluss Mess des Steuergeräts SG verbunden ist.

Wie bereits bei der Beschreibung der Figur 2 erwähnt, liegt beispielsweise am Zwischenkreiskondensator C1 eine hohe Spannung von 60V und am Akkumulator B36 eine Spannung von 36V.

Vor dem Umschalten des Schalters S3 wird Schalter S2 geöffnet. Von dem Augenblick an, in dem Schalter S3 in seine Schaltstellung a überführt wird, beginnt ein Ausgleichstrom von C1 über R und L zu B36 gemäß Figur 3 zu fließen. Dieser Ausgleichstrom bewirkt an der Drossel L (und R) einen Spannungsabfall. In diesem Fall liegt dem gemäß am Verbindungspunkt A ein höheres Potential als am Verbindungspunkt B.

Bei entsprechender Auslegung der Schaltung (Figur 4) liegt am Emitter des Transistors Q1 dann ein höheres Potential als an seiner Basis, an der ein dem Potential des Verbindungspunktes B proportionales Potential liegt, so dassQ1 leitend geschaltet wird.

Solange der Ausgleichstrom eine gewisse Größe übersteigt und damit die Emitter-Basis-Spannung des pnp-Transistors Q1 überschritten wird, wird Transistor Q1 leitend bleiben und ein Strom vom Verbindungspunkt A über R1, Q1, R7 und R8 nach Bezugspotential GND fließen, was die Basisspannung des npn-Transistors Q3 anhebt, wodurch dieser leitend wird und bewirkt, dass das Signal Mess von einem H-Signal zu einem L-Signal wird.

Im Fall, dassdas Potential am Verbindungspunkt B höher ist als am Verbindungspunkt A, so wird pnp-Transistor Q2 und damit auch npn-Transistor Q3 leitend. Aus diesem Grund ist die Schaltung um die Transistoren Q1 und Q2 symmetrisch ausgelegt.

Figur 5 zeigt das Steuergerät SG, soweit es die Steuerung der Schalter S1 bis S3 betrifft. Darauf wird später noch näher eingegangen.

Aus Figur 6 sind die entsprechenden Signalpegel und Schaltstellungen der Schalter S1 bis S3 zu bestimmten Zeitpunkten zu entnehmen.

Beide Figuren werden nachstehend beschrieben, wobei im wesentlichen auf Figur 6 Bezug genommen wird.

Ausgehend von den Schalterstellungen in Figur 2 (S1 offen, S2 geschlossen und S3 in Stellung b) soll der Zwischenkreiskondensator C1, der bisher mit dem Doppelschichtkondensator DLC verbunden war, nun mit Akkumulator B36 verbunden werden.

Ein Umschaltbefehl Um von einem nicht dargestellten Teil des Steuergeräts SG, der vor dem Zeitpunkt t1 ein L-Signal (Low-Signal) war, springt zum Zeitpunkt t1 von L nach H (High-Signal).

Zugleich mit einem Umschaltbefehl werden zwei Zeitglieder T1 und T2 angestoßen.

Dabei ist T1 ein zweiflankengetriggertes Verzögerungsglied. Es verzögert das von beiden Flanken des Umschaltbefehls Um bewirkte Umschalten des Schalters S3 (von Schaltstellung b nach a oder umgekehrt) um eine Verzögerungszeit T1 und soll sicherstellen, dass nach Ablauf dieser Verzögerungszeit T1 alle Schalter, die ja in diesem Ausführungsbeispiel Relaisschalter sind, sicher in ihrer neuen Schaltstellung angelangt sind. Bedingt durch die zu schaltenden Ströme sind für die Leistungsschalter S1 und S2 Relais mit größerer Bauform und folglich mit wesentlich größeren Schaltzeiten als für Schalter S3 erforderlich.

T2 ist als zweiflankengetriggertes Monoflop ausgebildet, es erzeugt sowohl bei der aufsteigenden als auch bei der absteigenden Flanke des Umschaltsignals Um einen L-Impuls der Dauer T2, die länger als T1 ist. Dieses Monoflop verhindert, dass das Einschalten des zuzuschaltenden Schalters, jetzt S1, vor Ablauf der Verzögerungszeit T2 erfolgen kann, wenn beispielsweise kein großer Ladungsausgleich stattfindet, welcher schlecht detektiert werden kann, aber trotzdem einen großen Ausgleichstrom verursachen würde.

Wenn nur zwei Elemente, beispielsweise C1 und B36, vorhanden sind, die miteinander verbunden oder voneinander getrennt werden sollen, brauchen die Zeitglieder T1 und T2 nur von der Einschaltflanke (von L nach H) des Umschaltsignals Um getriggert werden, also einflankengetriggert sein, da ein Ausschalten des Leistungsschalters strom- und spannungslos erfolgt.

Zugleich mit Erscheinen des Umschaltbefehls Um wird zunächst Schalter S2 geöffnet (in Figur 6 von H nach L). Schalter S1, der vor Zeitpunkt t1 geöffnet war, verbleibt weiterhin in dieser Stellung. Das Messsignal Mess der Schaltung aus Figur 4 ist H, da vor dem Umschaltbefehl und bis zum Ablauf der Verzögerungszeit T1 (Zeitpunkt t2) die Ladungen ausgeglichen waren und kein Ausgleichstrom fließt.

Nach Ablauf der Verzögerungszeit T1 wird Schalter S3 zum Zeitpunkt t2 von Schaltstellung b (L-Pegel) nach Schaltstellung a (H-Pegel) umgelegt. Ab diesem Zeitpunkt t2 fließt ein Ausgleichstrom von C1 (60V) zu B36 (36V), der bewirkt, dass das Messsignal Mess zum Zeitpunkt t2 von H nach L springt und auf diesem Pegel solange verweilt, bis der Ausgleichstrom abgeklungen ist.

Das erfolgt zum Zeitpunkt t4, der je nach Ladungsdifferenz früher oder später liegen kann. Zu diesem Zeitpunkt t4 wird dann Schalter S1 eingeschaltet, was jedoch nicht vor Ablauf der Verzögerungszeit T2, also nicht vor Zeitpunkt t3 erfolgen kann. Damit ist Schalter S1 strom- und spannungslos zugeschaltet worden.

Ein Zurückschalten, d.h., ein erneutes Verbinden des Zwischenkreiskondensators C1 mit dem Doppelschichtkondensator DLC, erfolgt in gleicher Reihenfolge, wie nachstehend beschrieben.

Der dazu erfolgende Umschaltbefehl Um springt zum Zeitpunkt t5 von H nach L. Gleichzeitig werden wieder beide Zeitglieder T1 und T2 angestoßen.

Zugleich mit dem Umschaltbefehl Um wird zunächst Schalter S1 geöffnet (in Figur 6 von H nach L). Schalter S2, der vor Zeitpunkt t5 geöffnet (L-Pegel) war, verbleibt weiterhin in dieser Stellung. Das Messsignal Mess ist H, da vor dem Umschaltbefehl und bis zum Ablauf der Verzögerungszeit T1 (Zeitpunkt t6) die Ladungen ausgeglichen waren und kein Ausgleichstrom fließt.

Mit Ablauf der Verzögerungszeit T1 wird Schalter S3 zum Zeitpunkt t6 von Schaltstellung a (H-Pegel) nach Schaltstellung b (L-Pegel) umgelegt. Ab diesem Zeitpunkt t6 fließt ein Ausgleichstrom von DLC (60V) zu C1 (36V), der bewirkt, dass das Messsignal Mess zum Zeitpunkt t6 von H nach L springt und auf diesem Pegel solange verweilt, bis der Ausgleichstrom abgeklungen ist.

Das erfolgt zum Zeitpunkt t8, der wieder je nach Ladungsdifferenz früher oder später liegen kann. Zu diesem Zeitpunkt t8 wird dann Schalter S2 eingeschaltet (von L- nach H-Pegel), was jedoch wieder nicht vor Ablauf der Verzögerungszeit T2, also nicht vor Zeitpunkt t7 erfolgen kann. Damit ist Schalter S2 wieder stromlos zugeschaltet worden.

In der Schaltung des Steuergeräts SG nach Figur 5 sind die beiden Zeitglieder T1 und T2 bereits beschrieben.

Zeitglied T1 setzt den Schaltbefehl Um zum Umschalten des Schalters S3 von Stellung a nach b oder umgekehrt, um die Verzögerungszeit T1 verzögert, um.

Zeitglied T2 geht mit jedem Flankenwechsel des Umschaltsignals Um für die Dauer der Verzögerungszeit T2 auf L-Pegel.

Zwei Dreifach-UND-Glieder U1 und U2 vereinen die Signale Um (UND-Glied U1) oder (über den Inverter N1 invertiert) "Uminvertiert" (UND-Glied U2), Ausgangssignal von T2, und Strommesssignal Mess. Nur wenn alle drei Eingangssignale von U1 oder U2 H-Pegel haben, hat auch das entsprechende Ausgangssignal H-Pegel. Dies entspricht einer Verriegelung, die sicherstellt, dass der Ausgleichsvorgang über Schalter S3 abgeschlossen ist und über ihn kein Strom mehr fließt.

Zwei nachfolgende Flip-Flops FF1 und FF2 werden mit dem durch den Inverter N2 invertierten Ausgangssignal des Zeitgliedes T2 zurückgesetzt. UND-Glied U1 oder UND-Glied U2 setzt nach Ablauf der Verzögerungszeit T2 das Flip-Flop FF1 oder FF2.

Mit Hilfe der Inverter N3, N4 und der UND-Glieder U3 und U4 wird schließlich sichergestellt, dass die Schalter S1 und S2 nicht gleichzeitig eingeschaltet sein können.

## Patentansprüche

1. Verfahren zum Einschalten eines zwischen kapazitiven Elementen (C1, DLC, B36) angeordneten Leistungsschalters (S1, S2),
**dadurch gekennzeichnet,**
**dass** den Schaltkontakten des noch geöffneten Leistungsschalters (S1, S2) wenigstens ein Ausgleichselement (L) parallelgeschaltet wird, über welches zwischen den miteinander zu verbindenden Elementen (C1, B36, DLC) Ausgleichströme fließen und abklingen können, bevor anschließend der Leistungsschalter (S1, S2) strom- und spannungslos geschlossen wird.

2. Verfahren nach Anspruch 1, **dadurch gekennzeichnet, dass** das Parallelschalten des Ausgleichselements (L) gegenüber dem Einschaltbefehl (Um) zum Einschalten des Leistungsschalters (S1, S2) um eine erste Verzögerungszeit (T1) verzögert erfolgt.

3. Verfahren nach Anspruch 1, **dadurch gekennzeichnet, dass** das Einschalten des Leistungsschalters (S1, S2) erst nach Abklingen eines Ausgleichstroms und nur dann erfolgt, wenn eine mit dem Einschaltbefehl (Um) beginnende zweite Verzögerungszeit (T2) abgelaufen ist.

4. Vorrichtung zur Durchführung des Verfahrens nach einem der Ansprüche 1 bis 3, **dadurch gekennzeichnet,**
**dass** das Ausgleichselement (L) eine Drossel ist, welche den Schaltkontakten des noch geöffneten Leistungsschalters (S1, S2) mittels eines weiteren Schalters (S3) parallelschaltbar ist,
**dass** eine Detektionsschaltung (DTS) vorgesehen ist, welche einen zwischen den miteinander zu verbindenden Elementen (C1, DLC, B36) fließenden Strom detektiert, und
**dass** ein Steuergerät (SG) vorgesehen ist, von welchem der Leistungsschalter (S1, S2) geschlossen wird, sobald von der Detektionsschaltung (DTS) kein über die Drossel (L) fließender Ausgleichstrom festgestellt wird.

5. Vorrichtung nach Anspruch 4, **dadurch gekennzeichnet, dass** mit der Drossel (L) ein Widerstand (R) in Reihe liegt, welcher der Ohm'sche Widerstand der Drossel oder ein realer Widerstand ist.

6. Vorrichtung nach Anspruch 4, **dadurch gekennzeichnet, dass** die Detektionsschaltung (DTS) so ausgebildet ist,
dass von dem einen Anschluss (A) der Drossel (L) eine Reihenschaltung aus einem Widerstand (R1) und der Emitter-Kollektor-Strecke eines pnp-Transistors (Q1) abzweigt, ebenso von dem anderen Anschluss (B) der Drossel (L) eine Reihenschaltung aus einem Widerstand (R3) und der Emitter-Kollektor-Strecke eines pnp-Transistors (Q2) abzweigt,
dass die Kollektoren der beiden Transistoren (Q1, Q2) miteinander und über eine Reihenschaltung zweier Widerstände (R7 und R8) mit Bezugspotential (GND) verbunden sind,
dass zwischen dem einen Anschluss (A) und Bezugspotential (GND) eine Reihenschaltung aus einer zum Bezugspotential (GND) hin stromleitenden Diode (D1) und einem Widerstand R2 liegt, und ebenso zwischen dem anderen Anschluss (B) und Bezugspotential (GND) eine Reihenschaltung aus einer zum Bezugspotential (GND) hin stromleitenden Diode (D2) und einem Widerstand R4 liegt,
dass der Verbindungspunkt zwischen Diode (D1) und Widerstand (R2) und die Basis des pnp-Transistors (Q2) durch einen Widerstand (R5) verbunden sind, und ebenso der Verbindungspunkt zwischen Diode (D2) und Widerstand (R4) und die Basis des pnp-Transistors (Q1) durch einen Widerstand (R5) verbunden sind, und
dass der Verbindungspunkt zwischen den beiden Widerständen (R7 und R8) mit der Basis eines npn-Transistors (Q3) verbunden ist, dessen Emitter mit Bezugspotential (GND) verbunden ist, und dessen Kollektor einerseits über einen Widerstand (R9) mit einer Versorgungsspannung (Vcc) verbunden ist, und andererseits mit einem Anschluss (Mess) des Steuergeräts (SG) verbunden ist.

7. Vorrichtung nach Anspruch 4, **dadurch gekennzeichnet, dass** das Steuergerät (SG)
ein erstes Verzögerungsglied (T1) aufweist, welches das Parallelschalten der Drossel (L) zu dem geöffneten Leistungsschalter (S1, S2) um eine vorgegebene erste Verzögerungszeit (T1) ab dem Einschaltbefehl (Um) verzögert, und
ein als Monoflop ausgebildetes zweites Verzögerungsglied (T2) aufweist, welches das Einschalten des Leistungsschalters (S1, S2) frühestens nach Ablauf einer zweiten Verzögerungszeit (T2) erlaubt, welche länger als die erste Verzögerungszeit (T1) ist und mit dem Beginn des Einschaltbefehls (Um) zu laufen beginnt.

8. Vorrichtung nach Anspruch 4, **dadurch gekennzeichnet, dass** das Ausschalten des Leistungsschalters (S1, S2) mit dem Ende des Einschaltbefehls (Um) erfolgt.

9. Vorrichtung nach einem der Ansprüche 4 bis 8 zum alternativen Verbinden eines kapazitiven Elements (C1) mit weiteren Elementen (DLC, B36), **dadurch gekennzeichnet,**
**dass** der weitere Schalter (S3) ein Umschalter ist,
**dass** das erste Verzögerungsglied (T1) ein zweiflankengetriggertes Verzögerungsglied ist,
**dass** das zweite Verzögerungsglied (T2) als zweiflankengetriggertes Monoflop ausgebildet ist, und
**dass** mit Erscheinen des Einschaltbefehls (Um), der in diesem Fall ein Umschaltbefehl ist, sämtliche Leistungsschalter (S1, S2) geöffnet werden.

10. Vorrichtung nach einem der Ansprüche 4 bis 9, **dadurch gekennzeichnet, dass** die Leistungsschalter (S1 bis S3) relaisgesteuerte Schalter sind.

## Claims

1. Method for switching on a power switch (S1, S2) arranged between capacitive elements (C1, DLC, B36),
**characterised in that**
at least one compensating element (L), by way of which equalising currents can flow between elements (C1, B36, DLC) which are to be connected to one another and can decay before the power switch (S1, S2) is subsequently closed in a current-free and no-voltage situation, is connected in parallel to the switching contacts of the still open power switch (S1, S2).

2. Method according to claim 1, **characterised in that** the parallel connection of the compensating element (L) with respect to the switch-on command (Um) for switching on the power switch (S1, S2) takes place delayed by a first delay time (T1).

3. Method according to claim 1, **characterised in that** the switch-on of the power switch (S1, S2) takes place only after an equalising current has decayed and only when a second delay time (T2) beginning with the switch-on command (Um) has elapsed.

4. Device for implementing the method according to one of claims 1 to 3, **characterised in that**
the compensating element (L) is a choke which can be connected in parallel with the switching contacts of the still open power switch (S1, S2) by means of a further switch (S3),
a detection circuit (DTS) is provided which detects a current flowing between the (C1, DLC, B36) elements which are to be connected to one another, and
a control device (SG) is provided, by which the power switch (S1, S2) is closed as soon as no equalising current flowing by way of the choke (L) is detected by the detection circuit.

5. Device according to claim 4, **characterised in that** a resistor (R) is connected in series with the choke (L), which is the ohmic resistor of the choke or a real resistor.

6. Device according to claim 4, **characterised in that** the detection circuit (DTS) is designed such that
a series circuit comprising a resistor (R1) and the emitter-collector path of a pnp transistor (Q1) branches off from the one connection (A) of the choke (L), and a series circuit comprising a resistor (R3) and the emitter-collector path of a pnp transistor (Q2) also branches off from the other connection point (B) of the choke (L),
the collectors of the two transistors (Q1, Q2) are connected to one another and by way of a series circuit comprising two resistors (R7 and R8) to ground (GND),
a series circuit comprising a diode (D1) conducting current to ground (GND) and a resistor R2 is located between the one connection point (A) and ground (GND), and a series circuit comprising a diode (D2) conducting current to ground (GND) and a resistor R4 is also located between the other connection point (B) and ground (GND),
the connection point between diode (D1) and resistor (R2) and the base of the pnp transistor (Q2) are connected by means of a resistor (R5), and likewise the connection point between diode (D2) and resistor (R4) and the base of the pnp transistor (Q1) are connected by means of a resistor (R5), and
the connection point between the two resistors (R7 and R8) is connected to the base of an npn transistor (Q3) whose emitter is connected to ground (GND), and whose collector is connected on the one hand by way of a resistor (R9) to a supply voltage (Vcc) , and is connected on the other hand to a terminal (Mess) of the control device (SG).

7. Device according to claim 4, **characterised in that** the control device (SG)
has a first delay element (T1) which delays the parallel connection of the choke (L) to the open power switch (S1, S2) by a predefined first delay time (T1) starting from the switch-on command (Um), and
has a second delay element (T2) taking the form of a monoflop which permits the switch-on of the power switch (S1, S2) at the earliest after a second delay time (T2) has elapsed which is longer than the first delay time (T1) and starts running at the beginning of the switch-on command (Um).

8. Device according to claim 4, **characterised in that** the switch-off of the power switch (S1, S2) takes place at the end of the switch-on command (Um).

9. Device according to one of claims 4 to 8 for the alternative connection of a capacitive element (C1) to further elements (DLC, B36), **characterised in that**
the further switch (S3) is a changeover switch,
the first delay element (T1) is a dual-edge triggered delay element,
the second delay element (T2) takes the form of a dual-edge triggered monoflop, and
all power switches (S1, S2) are opened upon the appearance of the switch-on command (Um), which in this case is a changeover command.

10. Device according to one of claims 4 to 9, **characterised in that** the power switches (S1 to S3) are relay-controlled switches.

## Revendications

1. Procédé permettant de fermer un interrupteur de puissance (S1,S2) disposé entre des éléments capacitifs (C1, DLC, B36),
**caractérisé en ce que**
parallèlement aux contacts de commutation de l'interrupteur de puissance (S1, S2) encore ouvert est monté au moins un élément de compensation (L), à travers lequel des courants compensateurs peuvent passer entre les éléments à connecter entre eux (C1, B36, DLC) et décroître, avant que l'interrupteur de puissance (S1, S2) soit ensuite fermé sans courant et hors tension.

2. Procédé selon la revendication 1, **caractérisé en ce que** la mise en parallèle de l'élément de compensation (L) par rapport à l'ordre de fermeture (Um) destiné à fermer l'interrupteur de puissance (S1, S2) s'effectue de manière retardée, et ce d'une première durée de temporisation (T1).

3. Procédé selon la revendication 1, **caractérisé en ce que** la fermeture de l'interrupteur de puissance (S1, S2) ne s'effectue qu'après décroissement d'un courant compensateur, et ce uniquement lorsqu'une deuxième durée de temporisation (T2) qui débute avec l'ordre de fermeture (Um) s'est écoulée.

4. Dispositif permettant de réaliser le procédé selon l'une des revendications 1 à 3, **caractérisé en ce que**
l'élément de compensation (L) est une bobine de réactance qui peut, au moyen d'un interrupteur supplémentaire (S3), être montée en parallèle avec les contacts de commutation de l'interrupteur de puissance (S1, S2) encore ouvert,
il est prévu un circuit de détection (DTS) qui détecte un courant circulant entre les éléments (Cl, DLC, B36) devant être connectés entre eux, et
il est prévu un appareil de commande (SG) qui ferme l'interrupteur de puissance (S1, S2) dès que le circuit de détection (DTS) constate que plus aucun courant compensateur ne passe par la bobine de réactance (L).

5. Dispositif selon la revendication 4, **caractérisé en ce qu'**avec la bobine de réactance (L) est montée en série une résistance (R) qui est la résistance ohmique de la bobine de réactance ou une résistance réelle.

6. Dispositif selon la revendication 4, **caractérisé en ce que** le circuit de détection (DTS) est formé de telle sorte que
au niveau d'une connexion (A) de la bobine de réactance (L) bifurque un montage en série se composant d'une résistance (R1) et de la section émetteur-collecteur d'un transistor PNP (Q1), de même qu'au niveau de l'autre connexion (B) de la bobine de réactance (L) bifurque un montage en série se composant d'une résistance (R3) et de la section émetteur-collecteur d'un transistor PNP (Q2),
les collecteurs des deux transistors (Q1, Q2) sont connectés entre eux et, par un montage en série de deux résistances (R7, R8), sont connectés avec le potentiel de référence (GND),
entre ladite connexion (A) et le potentiel de référence (GND) se trouve un montage en série se composant d'une diode (D1) conduisant du courant vers le potentiel de référence (GND) et d'une résistance (R2), de même qu'il se trouve, entre l'autre connexion (B) et le potentiel de référence (GND), un montage en série se composant d'une diode (D2) conduisant du courant vers le potentiel de référence (GND) et d'une résistance (R4),
le point de connexion entre diode (D1) et résistance (R2) et la base du transistor PNP (Q2) sont connectés entre eux par une résistance (R5), de même que le point de connexion entre diode (D2) et résistance (R4) et la base du transistor PNP (Q1) sont connectés entre eux par une résistance (R5), et
le point de connexion entre les deux résistances (R7 et R8) est connecté avec la base d'un transistor NPN (Q3) dont l'émetteur est connecté au potentiel de référence (GND) et dont le collecteur est connecté, d'un côté, par l'intermédiaire d'une résistance (R9), à une tension d'alimentation (Vcc) et, d'un autre côté, à un raccordement (Mess) de l'appareil de commande (SG).

7. Dispositif selon la revendication 4, **caractérisé en ce que** l'appareil de commande (SG)
présente un premier relais temporisateur (T1) qui retarde d'une première durée de temporisation (T1) préalablement définie, à partir de l'ordre de fermeture (Um), la mise en parallèle de la bobine de réactance (L) avec l'interrupteur de puissance (S1, S2) ouvert, et
présente un deuxième relais temporisateur (T2), réalisé sous forme de monoflop, lequel permet la fermeture de l'interrupteur de puissance (S1, S2) au plus tôt après écoulement d'une deuxième durée de temporisation (T2), laquelle est plus longue que la première durée de temporisation (T1) et commence avec le début de l'ordre de fermeture (Um).

8. Dispositif selon la revendication 4, **caractérisé en ce que** l'ouverture de l'interrupteur de puissance (S1, S2) s'effectue avec la fin de l'ordre de fermeture (Um).

9. Dispositif selon l'une des revendications 4 à 8 permettant la connexion alternative d'un élément capacitif (C1) à d'autres éléments (DLC, B36), **caractérisé en ce que**
l'interrupteur supplémentaire (S3) est un commutateur,
le premier relais temporisateur (T1) est un relais temporisateur à déclenchement sur deux flancs,
le deuxième relais temporisateur (T2) est réalisé sous forme de monoflop à déclenchement sur deux flancs, et avec l'apparition de l'ordre de fermeture (Um) qui, en l'occurrence, est un ordre de commutation, tous les interrupteurs de puissance (S1, S2) sont ouverts.

10. Dispositif selon l'une des revendications 4 à 9, **caractérisé en ce que** les interrupteurs de puissance (S1 à S3) sont des interrupteurs commandés par relais.
